# EUROPÄISCHE PATENTANMELDUNG

(11) **EP 1 465 006 A1**
(43) Veröffentlichungstag der Anmeldung: **06.10.2004**
(21) Anmeldenummer: 04008083.0
(22) Anmeldetag: 02.04.2004
(51) Int. Cl.: G03B 1/22, G03B 1/48, H04N 3/40

(54) **Laufbildfilm-Haltevorrichtung und Filmabtastvorrichtung mit alternativer Halteposition**

(30) Priorität: 04.04.2003 DE 10315482
(71) Anmelder: ARNOLD & RICHTER CINE TECHNIK GMBH & CO. BETRIEBS KG, 80799 München (DE)
(72) Erfinder: Sander, Bernhard, 80939 München (DE); Steurer, Johannes, Dr., 84034 Landshut (DE)
(74) Vertreter: Manitz, Finsterwald & Partner GbR

(57) **Zusammenfassung**

Die Erfindung betrifft eine Filmhaltevorrichtung (11,33,37,61) zum Halten eines intermittierend transportierten Laufbildfilms (71). Die Filmhaltevorrichtung besitzt eine Filmbahn (33) zum Führen des Laufbildfilms sowie eine Sperrgreifereinrichtung (61;61'), die aus einer Freigabestellung in eine Greifstellung bewegt werden kann. In der Greifstellung greift die Sperrgreifereinrichtung in die Transportebene des Laufbildfilms (71) ein, um einen in der Filmbahn (33) geführten Laufbildfilm lagegenau zu fixieren. Für das Eingreifen der Sperrgreifereinrichtung in die Filmtransportebene ist alternativ zu einer Referenzposition (79) wenigstens eine Alternativposition (77) auswählbar.

## Beschreibung

Die Erfindung betrifft eine Filmhaltevorrichtung zum Halten eines intermittierend transportierten Laufbildfilms. Diese Vorrichtung besitzt zumindest eine Filmbahn, in der der Laufbildfilm während einer Transportbewegung geführt werden kann, sowie eine Sperrgreifereinrichtung, die aus einer Freigabestellung in eine Greifstellung bewegbar ist, in der die Sperrgreifereinrichtung in die Transportebene des Laufbildfilms eingreift, um einen in der Filmbahn geführten Laufbildfilm lagegenau zu fixieren.

Eine derartige Filmhaltevorrichtung findet beispielsweise in einer Filmabtastvorrichtung Verwendung. In einer Filmabtastvorrichtung wird der Laufbildfilm intermittierend transportiert, um die einzelnen aufeinander folgenden Filmbilder nacheinander zu beleuchten und abzutasten, beispielsweise um den Film zu digitalisieren. Hierbei ist es erwünscht, eine Sequenz von aufeinander folgenden Filmbildern des Laufbildfilms ohne Bildversatz abzutasten. Die einzelnen Filmbilder sollen also in konstanter Relativlage bezüglich der Filmbahn und bezüglich des verwendeten Lichtempfängers erfasst werden, um bei einem späteren Abspielen der Sequenz ein "Ruckeln" zu vermeiden. Zu diesem Zweck wird die Position des Laufbildfilms während des Stillstands zwischen zwei Transportbewegungen exakt fixiert. Hierfür greift gewöhnlich eine Sperrgreifereinrichtung in die Perforationslöcher ein, die an den beiden Längsseiten des Films vorgesehen sind und ansonsten einen Filmtransport mittels einer Zahntrommel gestatten.

Dabei ist jedem einzelnen Filmbild des Laufbildfilms ein Referenzperforationsloch zugeordnet, das die Position des betreffenden Filmbilds definiert. Diese Definition eines Referenzperforationslochs hat den Hintergrund, dass das Aufzeichnen und das Abspielen eines Laufbildfilms gewöhnlich mit unterschiedlichen Geräten erfolgt, so dass nun für die verschiedenen Geräte eine einheitliche Definition dafür besteht, welcher Stelle des Films für die exakte Positionierung maßgeblich ist. Die genannte Sperrgreifereinrichtung greift deshalb üblicherweise an einer Referenzposition in die Filmtransportebene ein, da dort die Anordnung des erläuterten Referenzperforationslochs des Laufbildfilms zu erwarten ist.

Dabei erweist es sich jedoch als ein Problem, wenn der Film zwischen zwei aufeinander folgenden Filmbildern geschnitten und geklebt worden ist. In diesem Fall verläuft der Schnitt nämlich zwischen dem Filmbild und dem zugeordneten Referenzperforationsloch, so dass nach dem Kleben die vorbestimmte exakte Relativlage dieses Filmbilds bezüglich des zugeordneten Referenzperforationslochs nicht mehr gewährleistet ist. Falls dieses Referenzperforationsloch dennoch mittels einer Sperrgreifereinrichtung zur Fixierung des Films verwendet wird, kann es zu einem unerwünschten Versatz im Bildstand kommen. Dieser Bildversatz kann später im Rahmen einer digitalen Nachbearbeitung der Bildsequenz zwar korrigiert werden. Dies ist jedoch unerwünscht aufwendig und teuer.

Es ist deshalb eine Aufgabe der Erfindung, eine Filmhaltevorrichtung zu schaffen, die einen Bildversatz während des Abspielens oder Abtastens einer Sequenz von aufeinander folgenden Filmbildern eines Laufbildfilms vermeidet.

Diese Aufgabe wird durch eine Filmhaltevorrichtung mit den Merkmalen des Anspruchs 1 gelöst, und insbesondere dadurch, dass für das Eingreifen der Sperrgreifereinrichtung in die Filmtransportebene alternativ zu einer Referenzposition wenigstens eine Alternativposition auswählbar ist.

Die erfindungsgemäße Filmhaltevorrichtung ist also dergestalt ausgebildet, dass die Sperrgreifereinrichtung wahlweise an einer Referenzposition oder an wenigstens einer Alternativposition in die Transportebene des Laufbildfilms bzw. in die Perforationslöcher des Laufbildfilms eingreifen kann. Es steht also zumindest eine zusätzliche Sperrgreiferposition zur Verfügung.

Diese Alternativposition ist bezüglich der Referenzposition der Sperrgreifereinrichtung um den vorbestimmten Abstand der Perforationslochpaare des Laufbildfilms - oder ein Vielfaches hiervon - versetzt, so dass anstelle des Referenzperforationslochs ein anderes Perforationsloch oder Perforationslochpaar zur Lagefixierung des Films mittels der Sperrgreifereinrichtung dienen kann. Dieses alternativ verwendete Perforationsloch ist zweckmäßigerweise senkrecht zu der Filmtransportrichtung unmittelbar benachbart zu dem zugeordneten Filmbild angeordnet, so dass ein Schnitt des Laufbildfilms dieses alternative Perforationsloch generell nicht von dem zugeordneten Filmbild trennt. Mit anderen Worten ist die Alternativposition der Sperrgreifereinrichtung so gewählt, dass auch bei geschnittenem Filmmaterial stets eine feste Relativposition der einzelnen Filmbilder bezüglich der Sperrgreifereinrichtung gewährleistet ist, auch wenn diese Relativposition nicht der Norm entspricht.

Die Auswahl entweder der Referenzposition oder der Alternativposition der Sperrgreifereinrichtung kann für das Abtasten eines Laufbildfilms einheitlich oder abschnittsweise unterschiedlich erfolgen, wobei auch eine automatische Auswahl möglich ist, wie noch erläutert wird.

Bei der genannten Sperrgreifereinrichtung kann es sich um einen einzelnen Sperrgreiferstift handeln, der in das jeweilige Perforationsloch eintaucht. Vorzugsweise besitzt die Sperrgreifereinrichtung jedoch ein Paar von Sperrgreiferstiften, die in ein Perforationslochpaar eingreifen.

Ein Vorteil der erfindungsgemäßen Filmhaltevorrichtung besteht also darin, dass der Bildstand auch durch eventuelle Klebestellen des Films und durch den hiermit verbundenen Verlust des jeweiligen Referenzperforationslochs für einzelne Filmbilder nicht verschlechtert wird. Dadurch ist ein Abspielen dieses Films oder der abgetasteten Bildsequenz ohne Bildversatz und somit ohne "Ruckeln" möglich. Eine ansonsten erforderliche, unerwünscht aufwendige digitale Nachbearbeitung zur Korrektur eines Bildversatzes kann somit entfallen.

Besonders vorteilhaft ist die Verwendung einer derartigen Filmhaltevorrichtung in einer Filmabtastvorrichtung, da dort häufig geschnittenes und geklebtes Filmmaterial zum Einsatz gelangt.

Gemäß einer bevorzugten Ausführungsform kann die Filmhaltevorrichtung eine zusätzliche Sperrgreifereinrichtung besitzen, die ebenfalls zwischen einer Freigabestellung und einer Greifstellung bewegbar ist und die in ihrer Greifstellung an der erläuterten Alternativposition in die Filmtransportebene eingreift, wobei eine der beiden Sperrgreifereinrichtungen für das Fixieren des Laufbildfilms auswählbar ist.

Alternativ hierzu kann die Sperrgreifereinrichtung an der Filmhaltevorrichtung mechanisch verschiebbar zwischen der Referenzposition und der Alternativposition ausgebildet sein, wobei insbesondere eine Fixiereinrichtung vorgesehen ist, durch die die Sperrgreifereinrichtung wahlweise in der Referenzposition oder der Alternativposition lagegenau fixiert werden kann.

Gemäß einer weiteren alternativen Ausgestaltung können wenigstens eine erste und eine zweite Filmhaltevorrichtung vorgesehen sein, die bezüglich einer Filmhalteraufnahme an einer Filmabtastvorrichtung austauschbar ausgebildet sind, wobei die Sperrgreifereinrichtung der einen Filmhaltevorrichtung in ihrer Greifstellung an der Referenzposition und die Sperrgreifereinrichtung der weiteren Filmhaltevorrichtung an der Alternativposition in die Filmtransportebene eingreift. Die Erfindung bezieht sich insofern auch auf ein System aus wenigstens einer ersten und einer zweiten derartigen Filmhaltevorrichtung.

Gemäß einer weiteren alternativen Ausführungsform ist die Sperrgreifereinrichtung dergestalt an der Filmhaltevorrichtung angeordnet, dass sie bezüglich einer ersten Transportrichtung des Laufbildfilms an der Referenzposition und bezüglich einer zweiten, entgegengesetzten Transportrichtung des Laufbildfilms an der Alternativposition in die Filmtransportebene eingreift, wobei die Filmhaltevorrichtung bezüglich einer Vertauschung der beiden Transportrichtungen symmetrisch ausgebildet ist. Mit anderen Worten kann diese Filmhaltevorrichtung in zwei verschiedenen Ausrichtungen in eine Filmhalteraufnahme beispielsweise einer Filmabtastvorrichtung eingesetzt werden, so dass wahlweise die Referenzposition oder die Alternativposition der Sperrgreifereinrichtung eingestellt ist. Ein Wechsel zwischen der Referenzposition und der Alternativposition der Sperrgreifereinrichtung erfolgt dadurch, dass die Filmhaltevorrichtung der Filmhalteraufnahme entnommen und um 180° gedreht wird. Das Gehäuse und die mechanischen und eventuellen elektrischen Verbindungsabschnitte dieser Filmhaltevorrichtung sind entsprechend symmetrisch ausgebildet.

Bei Filmabtastvorrichtungen besteht auch das Problem, dass der Laufbildfilm gewöhnlich eine natürliche Querwölbung innerhalb einer Ebene senkrecht zu der Längsrichtung des Films bzw. senkrecht zu der Filmtransportrichtung besitzt (so genannter "Curl"). Ferner kann der Film nach Lagerung auf einer Wickelspule eine Längswölbung entlang der Längsrichtung des Films besitzen. Derartige Wölbungen können bei einem Abtasten des Films zu unerwünschten Verzerrungseffekten des abgetasteten Bilds führen. Um dieses Problem zu beseitigen, ist gemäß einer Weiterbildung der Erfindung vorgesehen, dass die Filmhaltevorrichtung einen Andruckrahmen aufweist, der zwischen einer Freigabestellung und einer Andruckstellung bewegbar ist, wobei der Andruckrahmen in der Freigabestellung den in der Filmbahn geführten Laufbildfilm für eine Transportbewegung freigibt und in der Andruckstellung gemeinsam mit einem Gegendruckrahmen einen Halteschlitz begrenzt, in dem der in der Filmbahn befindliche Laufbildfilm im Wesentlichen spielfrei gefangen ist.

Der Andruckrahmen kann synchronisiert zu der Transportbewegung des Laufbildfilms intermittierend von dem Film abgehoben und an den Film angedrückt werden. In der Freigabestellung weicht der Andruckrahmen derartig aus der Transportebene des Laufbildfilms zurück, dass grundsätzlich keine Berührung mehr zwischen dem Andruckrahmen und dem in der Filmbahn geführten Laufbildfilm erfolgt. In der Andruckstellung bildet der Andruckrahmen gemeinsam mit einem Gegendruckrahmen einen Halteschlitz. Die lichte Höhe dieses Halteschlitzes ist so bemessen, dass der Laufbildfilm in dem Halteschlitz ohne Andruckkraft eingeschlossen ist. Dadurch ist nur noch eine minimale Wölbung des gefangenen Films möglich.

Die Filmhaltevorrichtung ermöglicht es somit, den Laufbildfilm während eines Stillstands in eine Planlage zu bringen. Eine eventuelle Wölbung des Films wird somit auf ein Minimum reduziert. Dadurch werden Bildverzerrungen bei einem Abtasten oder Belichten des Films vermieden. Das durch eine vorhandene Wölbung verursachte leichte Anliegen des Films an dem Andruckrahmen bzw. dem Gegendruckrahmen verhindert außerdem ein unerwünschtes Verrutschen oder Wackeln des Films, so dass der Bildstand noch weiter verbessert ist. Bildbereiche des Laufbildfilms werden dabei nicht berührt. Auch durch eventuelle Klebestellen ist die Filmsicherheit nicht gefährdet, da derartige Klebestellen die Filmhaltevorrichtung problemlos passieren können, wenn der Andruckrahmen in die Freigabestellung zurückbewegt ist.

Die Erfindung bezieht sich ferner auf eine Filmabtastvorrichtung zum Abtasten eines belichteten Laufbildfilms, mit einer Filmhaltevorrichtung zum Halten des Films, einer Filmantriebseinrichtung zum intermittierenden Transportieren des Films, einer Lichtquelle zum Aussenden von Sendelicht in Richtung der Filmhaltevorrichtung, und einem optoelektronischen Lichtempfänger zum Empfangen des durch die Filmhaltevorrichtung transmittierten Lichts und zum Erzeugen entsprechender Signalwerte, wobei die Filmhaltevorrichtung eine Filmbahn und eine Sperrgreifereinrichtung aufweist und in der erläuterten Weise ausgebildet ist. Insbesondere ist für das Eingreifen der Sperrgreifereinrichtung in die Filmtransportebene alternativ zu einer Referenzposition wenigstens eine Alternativposition auswählbar.

Weitere Ausführungsformen der Erfindung sind in den Unteransprüchen genannt.

Die Erfindung wird nachfolgend beispielhaft unter Bezugnahme auf die Zeichnungen beschrieben.
- Fig. 1: zeigt ein Bildfensterteil von schräg unten.
- Fig. 2: zeigt eine Filmbahn mit einem Andruckrahmen von schräg oben.
- Fig. 3: zeigt den Andruckrahmen gemäß Fig. 2 in einer Perspektivansicht von schräg oben.
- Fig. 4: zeigt eine Sperrgreifereinrichtung in einer Perspektivansicht von schräg oben.
- Fig. 5: zeigt einen Abschnitt eines Laufbildfilms in einer Draufsicht.
- Fig. 6a und 6b: zeigen eine Filmhaltevorrichtung in einer schematischen Mittenquerschnittsansicht parallel zu der Filmtransportrichtung, in einer Freigabestellung bzw. einer Haltestellung.
- Fig. 7a und 7b: zeigen die Filmhaltevorrichtung in einer schematischen Querschnittsansicht parallel zu der Filmtransportrichtung und gegenüber der Mittenquerschnittsansicht nach Fig. 6a und 6b seitlich versetzt, in einer Freigabestellung bzw. einer Haltestellung.
- Fig. 8a und 8b: zeigen die Filmhaltevorrichtung in einer schematischen Mittenquerschnittsansicht senkrecht zu der Filmtransportrichtung, in einer Freigabestellung bzw. einer Haltestellung.
- Fig. 9a und 9b: zeigen die Filmhaltevorrichtung in einer schematischen Querschnittsansicht senkrecht zu der Filmtransportrichtung und gegenüber der Mittenquerschnittsansicht gemäß Fig. 8a und 8b entlang der Filmtransportrichtung versetzt, in einer Freigabestellung bzw. einer Haltestellung.
- Fig. 10a und 10b: zeigen eine alternative Ausführungsform der Filmhaltevorrichtung gemäß Fig. 7a und 7b.
- Fig. 11: zeigt eine weitere alternative Ausführungsform der Filmhaltevorrichtung.
- Fig. 12: zeigt eine Filmabtastvorrichtung in einer schematischen Seitenansicht.

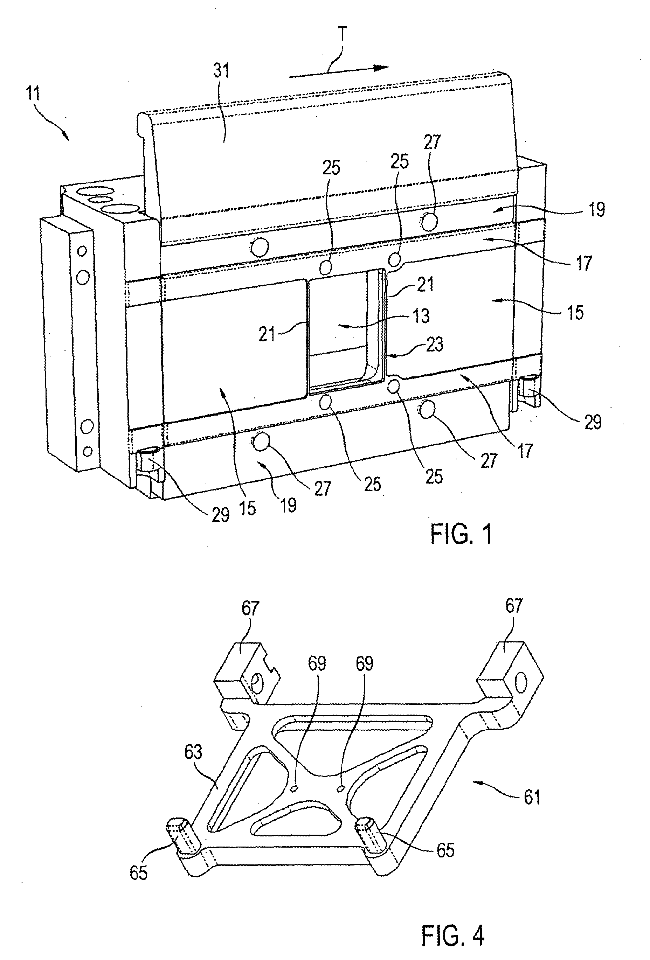

Fig. 1 bis 4 zeigen einige Bauteile einer Filmhaltevorrichtung. Fig. 1 zeigt ein Bildfensterteil 11 von schräg unten. Das Bildfensterteil 11 ist im Wesentlichen quaderförmig mit einem zentralen Fensterausschnitt 13. An der gezeigten Unterseite des Bildfensterteils 11 erstrecken sich entlang einer Filmtransportrichtung T zwei Vertiefungsabschnitte 15, die jeweils an dem Fensterausschnitt 13 angrenzen. Die Vertiefungsabschnitte 15 sind senkrecht zu der Filmtransportrichtung T durch einen jeweiligen polierten Filmauflageabschnitt 17 begrenzt. Die Filmauflageabschnitte 17 erstrecken sich entlang der Filmtransportrichtung T und grenzen seitlich nach außen wiederum an einem jeweiligen äußeren Vertiefungsabschnitt 19 an.

Die Filmauflageabschnitte 17 sind gegenüber den inneren Vertiefungsabschnitten 15 und den äußeren Vertiefungsabschnitten 19 um etwa 500 µm (0,5 mm) erhöht ausgebildet. Die erhöhten Filmauflageabschnitte 17 gehen in zwei Querstege 21 über, die sich senkrecht zu der Filmtransportrichtung T erstrecken und dabei die seitlichen Begrenzungen des Fensterausschnitts 13 bilden. Die Querstege 21 sind somit ebenfalls erhöht gegenüber den inneren Vertiefungsabschnitten 15 ausgebildet. Gemeinsam mit denjenigen Bereichen der Filmauflageabschnitte 17, die die weiteren Seitenkanten des Fensterausschnitts 13 begrenzen, bilden die beiden Querstege 21 somit einen Gegendruckrahmen 23, dessen Funktion nachfolgend noch erläutert wird.

Im Bereich des Fensterausschnitts 13 sind an den Filmauflageabschnitten 17 außerdem jeweils zwei Greiferaufnahmen 25 gezeigt. Ferner sind an den beiden äußeren Vertiefungsabschnitten 19 jeweils zwei Stellschraubengewindebohrungen 27 zu erkennen. Schließlich besitzt das Bildfensterteil zwei an den einen Filmauflageabschnitt 17 angrenzende Seitenführungserhöhungen 29. An der gegenüberliegenden Seite des Bildfensterteils 11 ist außerdem ein oberer Filmeinfädelflügel 31 angeformt.

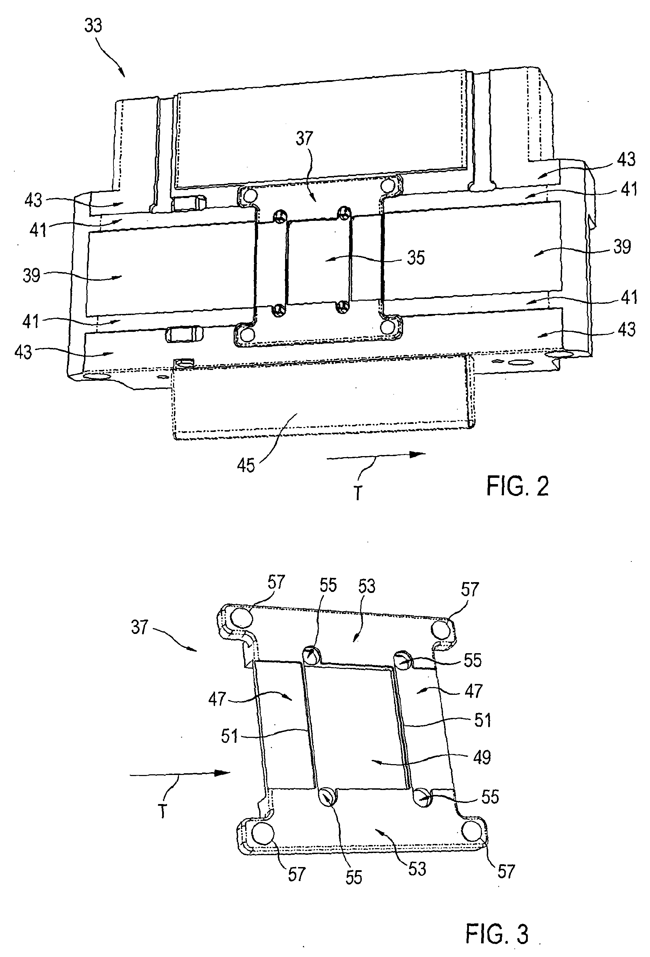

Fig. 2 zeigt eine dem Bildfensterteil 11 zugeordnete Filmbahn 33 von schräg oben. Auch die Filmbahn 33 ist im Wesentlichen quaderförmig, mit einem zentralen Fensterausschnitt 35, der von einem beweglichen Andruckrahmen 37 umgeben ist. Der Andruckrahmen 37 ist separat auch in Fig. 3 dargestellt.

An der in Fig. 2 gezeigten Oberseite der Filmbahn 33 sind ebenfalls zwei innere Vertiefungsabschnitte 39 vorgesehen, die sich entlang der Filmtransportrichtung T erstrecken und jeweils an dem Fensterausschnitt 35 angrenzen. Seitlich nach außen benachbart hierzu erstrecken sich vier polierte Filmauflageabschnitte 41 jeweils entlang der Filmtransportrichtung T. Diese sind seitlich wiederum durch äußere Vertiefungsabschnitte 43 begrenzt. Die Filmauflageabschnitte 41 sind gegenüber den Vertiefungsabschnitten 39 und 43 erhöht ausgebildet. An der Seite der Filmbahn 33 ist außerdem ein unterer Filmeinfädelflügel 45 angeformt.

Der Andruckrahmen 37 ist in der Filmbahn 33 formschlüssig gehalten und senkrecht zu der Erstreckungsebene der Filmauflageabschnitte 41 geringfügig beweglich, wie nachfolgend noch erläutert wird.

Wie aus Fig. 3 ersichtlich ist, besitzt der Andruckrahmen 37 ebenfalls zwei Vertiefungsabschnitte 47, die von einem zentralen Fensterausschnitt 49 jeweils durch einen erhöhten Quersteg 51 getrennt sind. Seitlich nach außen schließt sich an die Vertiefungsabschnitte 47 und den Fensterausschnitt 49 jeweils ein polierter Filmauflageabschnitt 53 an. Die beiden Filmauflageabschnitte 53 erstrecken sich entlang der Filmtransportrichtung T und sind gegenüber den Vertiefungsabschnitten 47 erhöht ausgebildet, so dass die Filmauflageabschnitte 53 letztlich dieselbe Höhe besitzen wie die Querstege 51 und in diese übergehen.

In der Umgebung des Fensterausschnitts 49 sind an jedem Filmauflageabschnitt 53 zwei Greiferaussparungen 55 ausgebildet. Ferner ist die in Fig. 3 gezeigte Oberseite des Andruckrahmens 37 mit vier Kontaktelementen 57 bestückt, die als gehärtete Stahlpilze in den Andruckrahmen 37 eingesetzt sind.

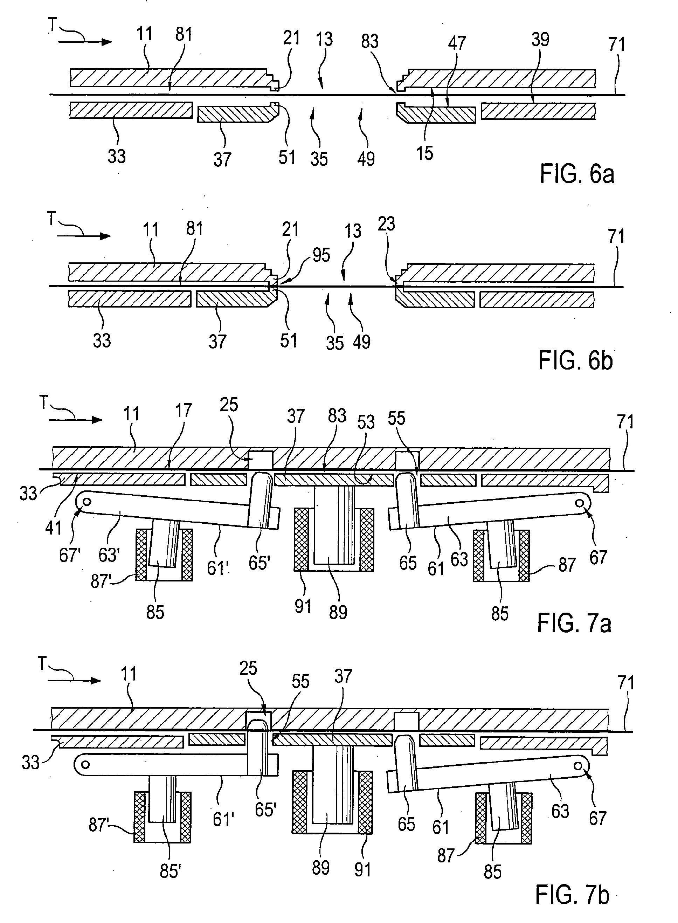

Fig. 4 zeigt einen Sperrgreiferhebel 61 von schräg oben. Der Sperrgreiferhebel 61 besitzt einen Rahmenabschnitt 63. An einem Ende des Rahmenabschnitts 63 sind zwei Sperrgreiferstifte 65 angebracht. An dem anderen Ende des Rahmenabschnitts 63 sind zwei Anlenkungsfortsätze 67 angeformt. In einem zentralen Bereich des Rahmenabschnitts 63 sind zwei Befestigungsbohrungen 69 vorgesehen.

Fig. 5 zeigt in einer Draufsicht einen Abschnitt eines Laufbildfilms 71. Der Laufbildfilm 71 besitzt in einer äquidistanten Anordnung entlang seiner Längsrichtung mehrere Bildbereiche 73, die jeweils einem belichteten oder zu belichtenden Einzelbild des Films entsprechen. Zwei benachbarte Bildbereiche 73 sind jeweils durch einen Trennbereich 75 voneinander getrennt. An den beiden Längsseiten des Laufbildfilms 71 ist jeweils eine regelmäßige Anordnung von Perforationslöchern 77 vorgesehen.

Gemäß Deutscher Industrienorm ist jedem Bildbereich 73 ein Referenzperforationsloch 79 zugeordnet, wobei dieses Referenzperforationsloch 79 in Höhe des in Filmtransportrichtung T benachbarten Bildbereichs 73 angeordnet ist. Diese Normierung hat den Sinn, dass für das Aufzeichnen und ein nachfolgendes Abspielen des Laufbildfilms 71 mit unterschiedlichen Geräten eine feste Relativlage zwischen einem Bildbereich 73 und einer Fixiereinrichtung definiert ist, die den Laufbildfilm 71 während des kurzzeitigen Stillstands fixiert. Dadurch ist ein konstanter Bildstand gewährleistet, so dass es beim Abspielen der Sequenz von Bildbereichen 73 nicht zu einem Bildversatz kommt.

Das Bildfensterteil 11 gemäß Fig. 1, die Filmwand 33 gemäß Fig. 2, der Andruckrahmen 37 gemäß Fig. 3 und der Sperrgreiferhebel 61 gemäß Fig. 4 sind Bestandteile einer Filmhaltevorrichtung. Diese dient zum Halten und Führen eines Laufbildfilms 71, beispielsweise in einer Filmabtastvorrichtung. Der Laufbildfilm 71 wird dabei mittels einer an den Perforationslöchern 77, 79 angreifenden Zahntrommel intermittierend bewegt, so dass die einzelnen Bildbereiche 73 nacheinander abgetastet werden können. Dabei sorgt der Sperrgreiferhebel 61 mit den Sperrgreiferstiften 65 während des Stillstands Laufbildfilms 71 für eine lagegenaue Fixierung des Laufbildfilms 71, und der Andruckrahmen 37 bewirkt ergänzend hierzu eine Beseitigung von eventuellen Wölbungen des betreffenden Bildbereichs 73.

Zu diesem Zweck sind das Bildfensterteil 11 und die Filmbahn 33 dergestalt aneinander montiert, dass die in Fig. 1 gezeigte Unterseite des Bildfensterteils 11 auf der in Fig. 2 gezeigten Oberseite der Filmbahn 33 aufliegt und durch die jeweiligen inneren Vertiefungsabschnitte 15 bzw. 39 ein Führungskanal 81 gebildet ist, innerhalb dessen der Laufbildfilm 71 entlang der Filmtransportrichtung T bewegt werden kann (vergleiche Fig. 6a und 6b). Zwischen dem Bildfensterteil 11 und der Filmbahn 33 ist dabei der Andruckrahmen 73 eingeschlossen. Ein oder mehrere Sperrgreiferhebel 61 sind an der Unterseite der Filmbahn 33 schwenkbar angelenkt, wie nachfolgend noch erläutert wird. Die Fensterausschnitte 13, 35 und 49 des Bildfensterteils 11, der Filmbahn 33 und des Andruckrahmens 37 sind dabei in Flucht angeordnet, so dass ein gemeinsamer Fensterausschnitt gebildet ist, durch den ein Bildbereich 73 des Laufbildfilms 71 abgetastet werden kann.

Fig. 6a und 6b zeigen die derartig montierte Filmhaltevorrichtung in einer schematischen Mittenquerschnittsansicht entlang der Transportrichtung T. Fig. 6a zeigt die Vorrichtung in einem Freigabezustand, in dem der Andruckrahmen 37 in eine Freigabestellung zurückgezogen, also in der Darstellung gemäß Fig. 6 nach unten bewegt ist. Der Laufbildfilm 71 kann in dem Führungskanal 81 völlig berührungsfrei bewegt werden. Die engste Stelle dieses Führungskanals 81 ist durch einen Freigabeschlitz 83 zwischen den Querstegen 21 des Bildfensterteils 11 und den Querstegen 51 des Andruckrahmens 37 gebildet.

Der Freigabeschlitz 83 besitzt eine solche lichte Höhe, dass selbst bei einer gewissen Wölbung des Laufbildfilms 71 keine Berührung an den Querstegen 21, 51 erfolgt. Beispielsweise kann der Abstand zwischen den Querstegen 21, 51 etwa 500 µm (0,5 mm) oder mehr betragen. Die lichte Höhe des zwischen dem Bildfensterteil 11 und der Filmbahn 33 gebildeten Führungskanals 81 kann in derselben Größenordnung oder noch größer gewählt sein.

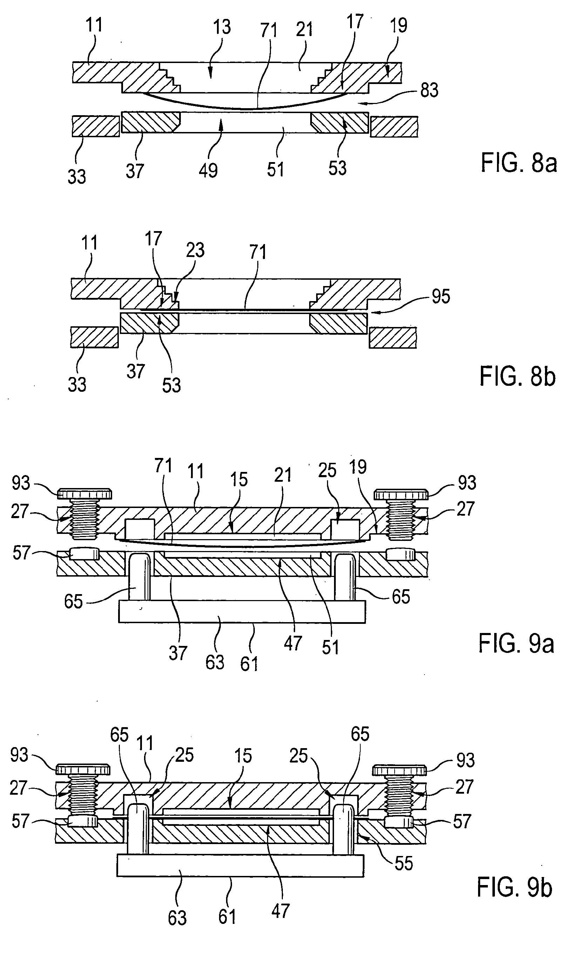

Fig. 8a zeigt den erläuterten Freigabezustand der Filmhaltevorrichtung in einer schematischen Querschnittsansicht entlang einer Ebene, die senkrecht zu der Transportrichtung T und durch den Fensterausschnitt 49 des Andruckrahmens 37 verläuft.

Fig. 7a zeigt diesen Freigabezustand in einer schematischen Querschnittsansicht entlang einer Ebene, die gegenüber der Querschnittsebene gemäß Fig. 6a seitlich versetzt ist und dabei durch die Sperrgreiferstifte 65, 65' zweier Sperrgreiferhebel 61, 61' verläuft. Es ist zu erkennen, dass die Seitenränder des Laufbildfilms 71 mit den Perforationslöchern 77, 79 zwischen den Filmauflageabschnitten 77 und 41 des Bildfensterteils 11 und der Filmbahn 33 geführt sind. Auch die Sperrgreiferhebel 61, 61' befinden sich in einer Freigabestellung, in der der Laufbildfilm 71 für eine Transportbewegung freigegeben ist.

Aus Fig. 7a ist auch ersichtlich, dass die an den jeweiligen Anlenkungsfortsätzen 67, 67' schwenkbar gelagerten Sperrgreiferhebel 61, 61' mittels eines jeweiligen Tauchspulenantriebs angetrieben werden können. Zu diesem Zweck sind an der Unterseite der Sperrgreiferhebels 61, 61' an den Befestigungsbohrungen 69 magnetische Tauchkolben 85, 85' vorgesehen, der in eine jeweilige Tauchspule 87, 87' hineinragen. Ferner ist aus Fig. 7a ersichtlich, dass auch der Andruckrahmen 37 einen Tauchspulenantrieb mit einem Tauchkolben 89 und einer Tauchspule 91 aufweist. Selbstverständlich ist es möglich, anstelle der erläuterten Tauchspulenantriebe andere elektrische oder mechanische Antriebsarten vorzusehen.

Fig. 9a zeigt den Freigabezustand der Vorrichtung schließlich in einer schematischen Querschnittsansicht entlang einer Ebene, die wiederum senkrecht zu der Filmtransportrichtung T verläuft, und zwar durch die Sperrgreiferstifte 65 des Sperrgreiferhebels 61 hindurch. Aus Fig. 9a ist ferner eine Verstelleinrichtung mit Stellschrauben 93 ersichtlich.

Fig. 6b zeigt in einer der Querschnittsansicht gemäß Fig. 6a entsprechenden Ansicht die Filmhaltevorrichtung in einem Haltezustand. Der Laufbildfilm 71 ist jetzt nach einer Transportbewegung zum Stillstand gekommen, beispielsweise um einen Bildbereich 73 abtasten zu können. Während des Stillstands des Laufbildfilms 71 ist durch entsprechende Ansteuerung der Tauchspulen 87, 87' einer der Sperrgreiferhebel 61, 61' nach oben bewegt worden, so dass die betreffenden Sperrgreiferstifte 65, 65' nun durch die Greiferaussparungen 55 des Andruckrahmens 37 hindurch in die Perforationslöcher 77, 79 des Laufbildfilms 71 und in die Greiferaufnahmen 25 des Bildfensterteils 11 eingreifen (Fig. 7b). Die Lage des Laufbildfilms 71 innerhalb der Filmhaltevorrichtung ist dadurch genau definiert.

Durch entsprechende Ansteuerung der Tauschspule 91 ist außerdem der Andruckrahmen 37 aus der Freigabestellung gemäß Fig. 6a in eine Andruckstellung bewegt worden, in der er gemeinsam mit dem Gegendruckrahmen 23 des Bildfensterteils 11 einen Halteschlitz 95 begrenzt. In diesem Halteschlitz 95 ist der Laufbildfilm 71 nun im Wesentlichen spielfrei gefangen. Die Querstege 21 und 51 des Bildfensterteils 11 und des Andruckrahmens 37 stehen nun einander genau gegenüber (Fig. 6b). Senkrecht hierzu umschließen die Filmauflageabschnitte 17 des Bildfensterteils 11 und die Filmauflageabschnitte 53 des Andruckrahmens 37 den Laufbildfilm 71 (Fig. 8b). Diese Festlegung des Laufbildfilms 71 mittels zweier zusammenwirkender umlaufender Rahmen 23 und 37 bewirkt, dass der Film 71 an den Fensterausschnitten 13, 35, 49 in eine Planlage gebracht wird, so dass optische Verzerrungen bei einem Abtasten oder Belichten des umschlossenen Bildbereichs 73 vermieden werden.

Eine Berührung mit dem Film 71 erfolgt dabei nur an den die Perforationslöcher 77, 79 tragenden Randbereichen sowie entlang der Trennbereiche 75, an denen der Film 71 keine Bildinformation enthält. Eine Andruckkraft wird auf den Laufbildfilm 71 nicht aktiv ausgeübt. Ein eventueller Kraftschluss des Films 71 innerhalb des Halteschlitzes 95 resultiert allenfalls aus einer zuvor vorhandenen und nun beseitigten Wölbung des Films 71. Zu diesem Zweck kann für die lichte Höhe des Halteschlitzes beispielsweise ein Wert vorgesehen sein, der der Summe aus der Dicke des Laufbildfilms 71 (beispielsweise 160 µm) und einem Sicherheitsabstand von etwa 20 µm entspricht.

Eine Besonderheit der erläuterten Filmhaltevorrichtung besteht darin, dass aufgrund der Ausbildung mit zwei Sperrgreiferhebeln 61, 61' für das Eingreifen der Sperrgreiferstifte 65, 65' in die Perforationslöcher 77 des Films 71 alternativ zu einer Referenzposition eine Alternativposition ausgewählt werden kann. Wie anhand von Fig. 5 bereits erläutert wurde, dienen die Referenzperforationslöcher 79 zur genauen Festlegung der Position des jeweils zugeordneten Bildbereichs 73, insbesondere falls der Film 71 in unterschiedlichen Geräten verwendet werden soll.

Falls jedoch zwischenzeitlich ein Schneiden und ein anschließendes Kleben des Films 71 entlang eines Trennbereichs 75 erfolgt, so wird dadurch das Referenzperforationsloch 79 von dem zugeordneten Bildbereich 73 getrennt, so dass selbst nach einem nachfolgenden Kleben die exakte räumliche Zuordnung nicht mehr gegeben ist. Für einen solchen Fall erweist es sich als vorteilhaft, wenn der Laufbildfilm 71 innerhalb der Filmhaltevorrichtung nicht unbedingt an den Referenzperforationslöchern 79 fixiert wird, sondern die Sperrgreiferstifte 65, 65' stattdessen in andere Perforationslöcher 77 eingreifen, die dem betreffenden Bildbereich 73 direkt benachbart sind.

Dies ist bei dem gezeigten Ausführungsbeispiel dadurch möglich, dass zusätzlich zu dem Sperrgreiferhebel 61 der weitere Sperrgreiferhebel 61' vorgesehen ist, wie in Fig. 7a und 7b gezeigt. Der zusätzliche Sperrgreiferhebel 61' ist dabei dergestalt an der Filmbahn 33 angelenkt, dass die Sperrgreiferstifte 65' in ihrer Greifstellung nicht in Referenzperforationslöcher 79 eingreifen, sondern in solche Perforationslöcher 77, die bezüglich des betreffenden Bildbereichs 73 unmittelbar seitlich benachbart angeordnet sind (vergleiche Fig. 5).

Dabei ist vorgesehen, dass jeweils lediglich eine der beiden Sperrgreifereinrichtungen 61, 61' für das Fixieren des Laufbildfilms 71 ausgewählt wird. Diese Auswahl kann dadurch erfolgen, dass jeweils der betreffende Tauchspulenantrieb angesteuert wird, um lediglich den zugeordneten Sperrgreiferhebel 61, 61' in die Greiferstellung zu bringen.

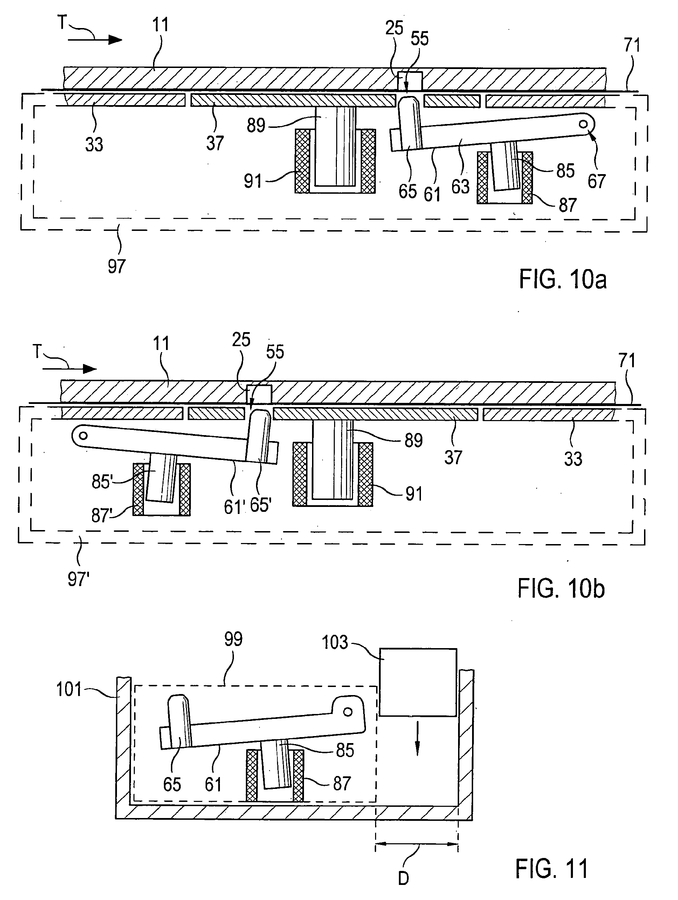

Fig. 10a und 10b zeigen eine alternative Möglichkeit, um die erläuterte Auswählbarkeit der Position des Sperrgreifereingriffs zu realisieren. Fig. 10a zeigt in einer Querschnittsansicht, die der Darstellung gemäß Fig. 7a entspricht, ein Filmbahngehäuse 97. Diese enthält einen Sperrgreiferhebel 61 mit Sperrgreiferstiften 65. Der Sperrgreiferhebel 61 ist an dem Filmbahngehäuse 97 schwenkbar angelenkt und mittels eines Tauchkolbens 85 und einer Tauchspule 87 zwischen einer Freigabestellung gemäß Fig. 10a und einer Greiferstellung bewegbar, wie dies bereits erläutert wurde.

Das Filmbahngehäuse 97 enthält optional ferner einen Andruckrahmen 37, der mittels eines Tauchkolbens 89 und einer Tauchspule 91 ebenfalls zu einer Bewegung zwischen einer Freigabestellung gemäß Fig. 10a und einer Andruckstellung bewegt werden kann.

Das Filmbahngehäuse 97 ist dergestalt ausgebildet, dass bei lagerichtigem Einsetzen in eine Filmhalteraufnahme einer Filmabtastvorrichtung oder dergleichen die Sperrgreiferstifte 65 in der Greiferstellung des Sperrgreiferhebels 61 in die Referenzperforationslöcher 79 des verwendeten Laufbildfilms 71 eingreifen. Mit anderen Worten ist das Filmbahngehäuse 97 so konfiguriert, dass der Sperrgreiferhebel 61 stets in der Referenzposition in die Filmtransportebene eingreift.

Zusätzlich zu dem erläuterten Filmbahngehäuse 97 gemäß Fig. 10a ist ein weiteres Filmbahngehäuse 97' vorgesehen, das in Fig. 10b in einer der Fig. 10a entsprechenden Querschnittsansicht dargestellt ist. Auch dieses zusätzliche Filmbahngehäuse 97' besitzt einen Sperrgreiferhebel 61' und optional einen Andruckrahmen 37 mit jeweiligen Tauchspulenantrieben. Allerdings ist der Sperrgreiferhebel 61' hier so angeordnet, dass er in der Gebrauchslage des Filmbahngehäuses 97' stets in einer Alternativposition in die Filmtransportebene eingreift, wenn der Sperrgreiferhebel 61' aus der Freigabestellung gemäß Fig. 10b in eine Greiferstellung bewegt wird.

Die beiden Filmbahngehäuse 97, 97' bilden somit - optional gemeinsam mit einem Bildfensterteil - ein System aus zwei Filmhaltevorrichtungen. In Abhängigkeit davon, ob ein Laufbildfilm 71 an den Referenzperforationslöchern 79 oder an alternativen Perforationslöchern 77 fixiert werden soll, kann das eine Filmbahngehäuse 97 oder das andere Filmbahngehäuse 97' ausgewählt werden.

Anstelle eines derartigen Systems von mehreren alternativ zu verwendenden Filmbahngehäusen 97, 97' kann auch ein einziges Filmbahngehäuse an seiner Außenseite dergestalt symmetrisch ausgebildet sein, dass es wahlweise in zwei unterschiedlichen Ausrichtungen in eine Filmhalteraufnahme einer Filmabtastvorrichtung oder dergleichen eingesetzt werden kann. Ein Sperrgreiferhebel ist innerhalb eines solchen Filmbahngehäuses dergestalt angeordnet, dass die zugehörigen Sperrgreiferstifte je nach der gewählten Ausrichtung des Filmbahngehäuses entweder in die Referenzperforationslöcher 79 oder in die alternativen Perforationslöcher 77 des verwendeten Laufbildfilms 71 eingreifen.

Fig. 11 zeigt in einer Querschnittsansicht, die der Darstellung gemäß Fig. 7a und 10a entspricht, eine weitere Möglichkeit zur Verwirklichung der auswählbaren Sperrgreiferposition. Auch hier ist ein Sperrgreiferhebel 61 mit einem Rahmenabschnitt 63, Sperrgreiferstiften 65 und einem Anlenkungsfortsatz 67 vorgesehen. Gemeinsam mit einem Tauchkolben 85 und einer Tauchspule 87 bildet dieser Sperrgreiferhebel 61 eine Sperrgreifereinheit 99, wobei der Sperrgreiferhebel 61 innerhalb dieser Sperrgreifereinheit 99 schwenkbar gelagert ist.

Die Sperrgreifereinheit 99 ist innerhalb eines Gehäuses 101 angeordnet. Die Einheit 99 kann innerhalb des Gehäuses 101 um einen Verschiebeabstand D verschoben werden, um wahlweise eine Referenzposition oder - wie in Fig. 11 gezeigt - eine Alternativposition einzunehmen. Das Gehäuse 101 ist beispielsweise an der Unterseite einer Filmbahn 33 montierbar, wie sie in Fig. 2 gezeigt ist.

Vorzugsweise sind die Sperrgreifereinheit 99 und das Gehäuse 101 formschlüssig zueinander ausgebildet, um völlig spielfrei aneinander anliegen zu können. Beispielsweise kann ein in Draufsicht V-förmiger Zentrieranschlag an beiden Seiten des Gehäuses 101 vorgesehen sein. Außerdem ist es bevorzugt, wenn eine Fixiereinrichtung, beispielsweise ein Einlegeteil 103 vorgesehen ist. Durch diese Fixiereinrichtung kann die Sperrgreifereinheit 99 innerhalb des Gehäuses 101 lagegenau fixiert werden. Insbesondere ist dabei ein werkzeugfreies Freigeben, Verschieben und Fixieren der Sperrgreifereinheit 99 möglich.

Gemäß einer optionalen Weiterbildung der erläuterten Filmhaltevorrichtung ist eine Verstelleinrichtung vorgesehen, durch die die minimale lichte Höhe des Halteschlitzes 95 in der Andruckstellung des Andruckrahmens 37 variiert werden kann, beispielsweise um die Vorrichtung an unterschiedliche Filmdicken anzupassen. Zu diesem Zweck sind die in den Fig. 9a und 9b gezeigten Stellschrauben 93 vorgesehen, die mit den Kontaktelementen 57 des Andruckrahmens 37 zusammenwirken.

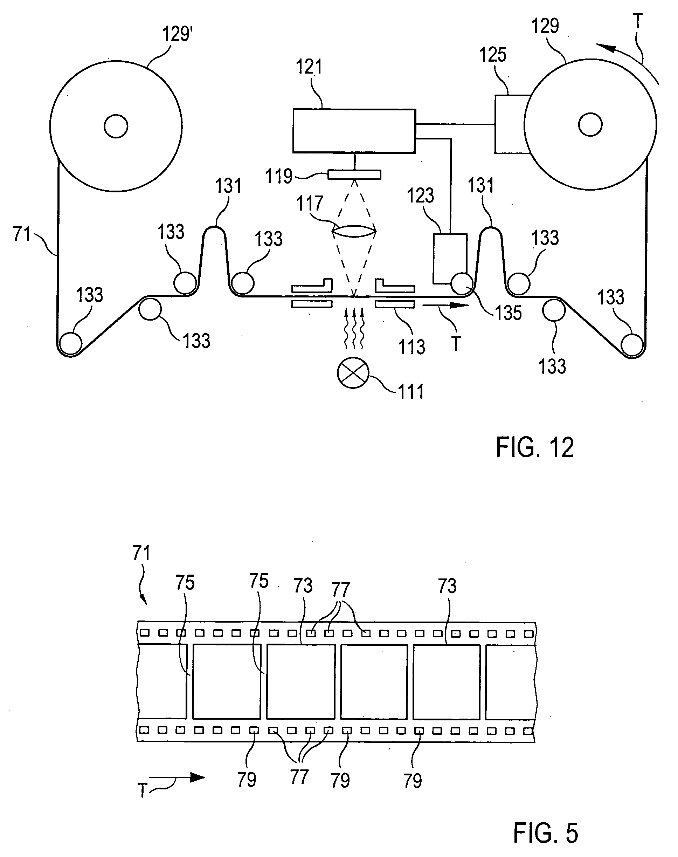

Fig. 12 illustriert schließlich eine mögliche Verwendung einer Filmhaltevorrichtung der erläuterten Art. Fig. 11 zeigt eine Filmabtastvorrichtung mit einer Lichtquelle 111, die beispielsweise mehrere Leuchtdioden unterschiedlicher Farbe aufweist. Diese emittiert homogene Lichtpulse einer vorgebbaren Sendelichtfarbe in Richtung einer Filmhaltevorrichtung 113 der erläuterten Art, in der ein belichteter Laufbildfilm 71 gehalten ist.

Auf der gegenüberliegenden Seite der Filmhaltevorrichtung 113 ist eine Empfangsoptik 117 angeordnet, beispielsweise eine Sammellinse. Diese bildet einen rückseitig beleuchteten Bildbereich 73 des Laufbildfilms 71 auf einen ortsauflösenden Lichtempfänger 119 ab, beispielsweise auf einen CMOS-Sensor. Der Lichtempfänger 119 ist mit einer Steuer- und Auswerteschaltung 121 verbunden, die beispielsweise einen Mikroprozessor aufweist. Die Steuer- und Auswerteschaltung 121 ist mit zwei Antriebseinrichtungen 123, 125 verbunden.

Der Laufbildfilm 71 wird zwischen zwei Wickelspulen 129, 129' unter Ausbildung zweier Ausgleichsschleifen 131 entlang mehrere Umlenkrollen 133 geführt. Die Wickelspule 129 und eine Transportrolle 135 werden von der Antriebseinrichtung 123 bzw. 125 angetrieben und bewegen den Laufbildfilm 71 intermittierend zu einer Transportbewegung in Transportrichtung T.

Die in Fig. 12 gezeigte Vorrichtung dient zum Abtasten und Digitalisieren der aufeinander folgenden Bildbereiche 73 des Laufbildfilms 71. Hierfür wird der Laufbildfilm 71 schrittweise durch die Filmhaltevorrichtung 113 geführt. Bei jedem Stillstand des Films 71 wird dessen Lage mittels des Sperrgreiferhebels 61 genau fixiert, und gegebenenfalls wird der Andruckrahmen 37 in die Andruckstellung überführt, wie im Einzelnen erläutert wurde. Die Steuer- und Auswerteschaltung 121 sorgt für die entsprechende Synchronisation der Antriebseinrichtungen 123, 125 und der Tauchspulantriebe 85, 87 und 89, 91. Sobald die Lage des Laufbildfilms 71 innerhalb der Filmhaltevorrichtung 113 festgelegt ist, steuert die Steuer- und Auswerteschaltung 121 die Lichtquelle 111 und den Lichtempfänger 119 an. Dadurch wird der Laufbildfilm 71 nacheinander mit den drei Grundfarben Rot, Grün und Blau beleuchtet, und mittels des Lichtempfängers 119 werden jeweils zugeordnete Abtastbilder erzeugt, die nachfolgend digitalisiert werden.

Zu der Filmabtastvorrichtung gemäß Fig. 12 ist noch anzumerken, dass die erwünschte Referenz- oder Alternativposition des Sperrgreiferhebels 61, 61' der Filmhaltevorrichtung 113 entweder für den gesamten Abtastvorgang einheitlich oder auch nur für einige Abschnitte des abzutastenden Laufbildfilms 71 ausgewählt werden kann. Hierbei ist auch eine automatische Auswahl möglich.

Beispielsweise kann die Steuer- und Auswerteschaltung 121 eine Bilderkennungsschaltung aufweisen, durch die ein Änderungsgrad ermittelbar ist, der dem Ausmaß einer Änderung der Bildinformation von zwei aufeinander folgend abgetasteten Bildbereichen 73 des Laufbildfilms entspricht. Die Steuer- und Auswerteschaltung 121 veranlasst ein Abtasten des betreffenden Bildbereichs 73 sowohl in der Referenzposition als auch in der Alternativposition des Sperrgreiferhebels 61, 61', wenn der ermittelte Änderungsgrad einen vorbestimmten Änderungsschwellwert überschreitet. Somit stehen vorsorglich zwei Abtastbilder zur Verfügung, so dass später erforderlichenfalls dasjenige Abtastbild für die abgetastete Bildsequenz herangezogen werden kann, das der Alternativposition des Sperrgreiferhebels 61, 61' entspricht.

Alternativ hierzu kann eine automatische Auswahl einer geeigneten Position des Sperrgreiferhebels 61, 61' auch anhand einer Änderung des so genannten Key Code erfolgen. Dieser Key Code ist an dem Randbereich eines üblichen Laufbildfilms 71 angebracht und entspricht letztlich einer fortlaufenden Nummerierung. Der Key Code kann automatisch erfasst werden, so dass eine vorsorgliche Auswahl der Alternativposition für den Sperrgreiferhebel 61, 61' veranlasst werden kann, wenn eine Änderung des Key Code auf eine Schnittstelle schließen lässt.

Schließlich kann die Filmabtastvorrichtung gemäß Fig. 12 auch eine Regelungsschaltung aufweisen, durch die die Eingriffstiefe des Sperrgreiferhebels 61 bzw. der Sperrgreiferstifte 65 in den Laufbildfilm 71 geregelt werden kann. Dabei berücksichtigt diese Regelungsschaltung die aktuelle Eingriffstiefe sowie die aktuelle Eingriffskraft. Die Eingriffstiefe kann beispielsweise anhand der Beaufschlagung eines ortsauflösenden Fotoelements (PSD) durch einen Laserstrahl ermittelt werden, der von einem mit dem Sperrgreiferhebel 61 verbundenen Spiegel reflektiert wird. Die Eingriffskraft kann beispielsweise aus der Stärke des durch die zugeordnete Tauchspule 87 geführten elektrischen Stroms ermittelt werden. Eine solche Regelung gewährleistet einen besonders schonenden Umgang mit dem Laufbildfilm 71. Eine derartige Regelungsschaltung muss nicht unbedingt Teil der Steuer- und Auswerteschaltung 121 sein, sondern kann direkt in die Filmhaltevorrichtung 113 integriert sein.

### Bezugszeichenliste

- 11: Bildfensterteil
- 13: Fensterausschnitt
- 15: innerer Vertiefungsabschnitt
- 17: Filmauflageabschnitt
- 19: äußerer Vertiefungsabschnitt
- 21: Quersteg
- 23: Gegendruckrahmen
- 25: Greiferaufnahme
- 27: Stellschraubengewindebohrung
- 29: Seitenführungserhöhung
- 31: oberer Filmeinfädelflügel
- 33: Filmbahn
- 35: Fensterausschnitt
- 37: Andruckrahmen
- 39: innerer Vertiefungsabschnitt
- 41: Filmauflageabschnitt
- 43: äußerer Vertiefungsabschnitt
- 45: unterer Filmeinfädelflügel
- 47: Vertiefungsabschnitt
- 49: Fensterausschnitt
- 51: Quersteg
- 53: Filmauflageabschnitt
- 55: Greiferaussparung
- 57: Kontaktelement
- 61, 61': Sperrgreiferhebel
- 63, 63': Rahmenabschnitt
- 65, 65': Sperrgreiferstift
- 67, 67': Anlenkungsfortsatz
- 69, 69': Befestigungsbohrung
- 71: Laufbildfilm
- 73: Bildbereich
- 75: Trennbereich
- 77: Perforationsloch
- 79: Referenzperforationsloch
- 81: Führungskanal
- 83: Freigabeschlitz
- 85, 85': Tauchkolben
- 87, 87': Tauchspule
- 89: Tauchkolben
- 91: Tauchspule
- 93: Stellschraube
- 95: Halteschlitz
- 97, 97': Filmbahngehäuse
- 99: Sperrgreifereinheit
- 101: Gehäuse
- 103: Einlegeteil
- 111: Lichtquelle
- 113: Filmhaltevorrichtung
- 117: Empfangsoptik
- 119: Lichtempfänger
- 121: Steuer- und Auswerteschaltung
- 123, 125: Antriebseinrichtung
- 129, 129': Wickelspule
- 131: Ausgleichsschleife
- 133: Umlenkrolle
- 135: Transportrolle
- D: Verschiebeabstand
- T: Filmtransportrichtung

## Patentansprüche

1. Filmhaltevorrichtung zum Halten eines intermittierend transportierten Laufbildfilms (71), mit:
- einer Filmbahn (33) zum Führen des Laufbildfilms, und
- einer Sperrgreifereinrichtung (61, 61'), die aus einer Freigabestellung in eine Greifstellung bewegbar ist, in der die Sperrgreifereinrichtung in die Transportebene des Laufbildfilms (71) eingreift, um einen in der Filmbahn geführten Laufbildfilm lagegenau zu fixieren,
**dadurch gekennzeichnet,**
**dass** für das Eingreifen der Sperrgreifereinrichtung (61, 61') in die Filmtransportebene alternativ zu einer Referenzposition wenigstens eine Alternativposition auswählbar ist.

2. Filmhaltevorrichtung nach Anspruch 1,
**dadurch gekennzeichnet,**
**dass** die Filmhaltevorrichtung eine zusätzliche Sperrgreifereinrichtung (61') aufweist, die in ihrer Greifstellung an der Alternativposition in die Transportebene des Laufbildfilms (71) eingreift, wobei eine der beiden Sperrgreifereinrichtungen (61, 61') für das Fixieren des Laufbildfilms auswählbar ist.

3. Filmhaltevorrichtung nach Anspruch 2,
**dadurch gekennzeichnet,**
**dass** eine elektrische Antriebseinrichtung (85, 87; 85', 87') zum Bewegen der Sperrgreifereinrichtungen (61, 61') aus der Freigabestellung in die Greifstellung vorgesehen ist, wobei die Antriebseinrichtung derart ansteuerbar ist, dass wahlweise eine der beiden Sperrgreifereinrichtungen in die Greifstellung gebracht wird.

4. Filmhaltevorrichtung nach Anspruch 1,
**dadurch gekennzeichnet,**
**dass** die Sperrgreifereinrichtung (99) zwischen der Referenzposition und der Alternativposition verschiebbar an der Filmhaltevorrichtung (101) ausgebildet ist, wobei vorzugsweise eine Fixiereinrichtung (103) vorgesehen ist, durch die die Sperrgreifereinrichtung wahlweise in der Referenzposition oder der Alternativposition lagegenau fixierbar ist.

5. Filmhaltevorrichtung nach Anspruch 1,
**dadurch gekennzeichnet,**
**dass** die Sperrgreifereinrichtung dergestalt an der Filmhaltevorrichtung angeordnet ist, dass die Sperrgreifereinrichtung bezüglich einer ersten Transportrichtung des Laufbildfilms an der Referenzposition in die Filmtransportebene eingreift und bezüglich einer zweiten, entgegen gesetzten Transportrichtung des Laufbildfilms an der Alternativposition in die Filmtransportebene eingreift, und
**dass** die Filmhaltevorrichtung bezüglich einer Vertauschung der Transportrichtungen symmetrisch ausgebildet ist.

6. Filmhaltevorrichtung nach einem der vorhergehenden Ansprüche,
**dadurch gekennzeichnet,**
**dass** die Filmhaltevorrichtung einen Andruckrahmen (37) aufweist, der zwischen einer Freigabestellung und einer Andruckstellung bewegbar ist,
wobei der Andruckrahmen in der Freigabestellung einen in der Filmbahn geführten Laufbildfilm (71) für eine Transportbewegung freigibt, und
wobei der Andruckrahmen in der Andruckstellung gemeinsam mit einem Gegendruckrahmen (23) einen Halteschlitz (95) begrenzt, in dem der in der Filmbahn befindliche Laufbildfilm (71) im Wesentlichen spielfrei gefangen ist.

7. Filmhaltevorrichtung nach Anspruch 6,
**dadurch gekennzeichnet,**
**dass** die Höhe des Halteschlitzes (95) in der Andruckstellung des Andruckrahmens (37) auf einen Wert eingestellt oder einstellbar ist, der der Summe aus der Dicke eines Laufbildfilms (71) und einem Sicherheitsabstand von etwa 20 µm entspricht.

8. Filmhaltevorrichtung nach einem der Ansprüche 6 oder 7,
**dadurch gekennzeichnet,**
**dass** die Filmhaltevorrichtung eine Verstelleinrichtung (93) aufweist, durch die die Höhe des Halteschlitzes (95) in der Andruckstellung des Andruckrahmens variierbar ist.

9. Filmhaltevorrichtung nach einem der Ansprüche 6 bis 8,
**dadurch gekennzeichnet,**
**dass** der Andruckrahmen (37) in der Freigabestellung gemeinsam mit dem Gegendruckrahmen (23) einen Freigabeschlitz (83) begrenzt, dessen Höhe vorzugsweise mindestens 500 µm beträgt.

10. Filmhaltevorrichtung nach einem der Ansprüche 6 bis 9,
**dadurch gekennzeichnet,**
**dass** der Andruckrahmen (37) an derjenigen Seite, die der Transportebene des Laufbildfilms (71) zugewandt ist, zwei vorstehende Querstege (51) aufweist, die sich senkrecht zu der Transportrichtung (T) des Laufbildfilms erstrecken.

11. Filmhaltevorrichtung nach einem der vorhergehenden Ansprüche,
**dadurch gekennzeichnet,**
**dass** zum Bewegen der Sperrgreifereinrichtung (61, 61') zwischen der Freigabestellung und der Greifstellung ein Tauchspulenantrieb (85, 87; 85', 87') vorgesehen ist.

12. Filmhaltevorrichtung nach einem der vorhergehenden Ansprüche
**dadurch gekennzeichnet,**
**dass** die Filmhaltevorrichtung mit einer Regelungsschaltung verbunden ist, durch die die Eingriffstiefe der Sperrgreifereinrichtung relativ zu der Filmbahn regelbar ist, wobei die Regelungsschaltung die aktuelle Eingriffstiefe und die aktuelle Eingriffskraft der Sperrgreifereinrichtung berücksichtigt.

13. System aus wenigstens einer ersten (97) und einer zweiten Filmhaltevorrichtung (97') zum Halten eines Laufbildfilms (71), wobei die erste und die zweite Filmhaltevorrichtung jeweils
- eine Filmbahn (33) zum Führen des Laufbildfilms, und
- eine Sperrgreifereinrichtung (61, 61') aufweisen, die aus einer Freigabestellung in eine Greifstellung bewegbar ist, in der die Sperrgreifereinrichtung in die Transportebene des Laufbildfilms eingreift, um einen in der Filmbahn geführten Laufbildfilm lagegenau zu fixieren,
**dadurch gekennzeichnet,**
**dass** die Sperrgreifereinrichtung (61) der ersten Filmhaltevorrichtung (97) in ihrer Greifstellung an einer Referenzposition in die Transportebene des Laufbildfilms (71) eingreift und die Sperrgreifereinrichtung (61') der zweiten Filmhaltevorrichtung (97') in ihrer Greifstellung an einer Alternativposition in die Transportebene des Laufbildfilms (71) eingreift.

14. Filmabtastvorrichtung zum Abtasten eines belichteten Laufbildfilms (71), mit:
- wenigstens einer Filmhaltevorrichtung (113) zum Halten des Laufbildfilms,
- einer Filmantriebseinrichtung (123, 125) zum intermittierenden Transportieren des Laufbildfilms,
- einer Lichtquelle (111) zum Aussenden von Sendelicht in Richtung der Filmhaltevorrichtung, und
- einem optoelektronischen Lichtempfänger (119) zum Empfangen des durch die Filmhaltevorrichtung transmittierten Lichts und zum Erzeugen entsprechender Signalwerte,
wobei die Filmhaltevorrichtung eine Filmbahn (33) zum Führen des Laufbildfilms und eine Sperrgreifereinrichtung (61, 61') aufweist, die aus einer Freigabestellung in eine Greifstellung bewegbar ist, in der die Sperrgreifereinrichtung in die Transportebene des Laufbildfilms (71) eingreift, um einen in der Filmbahn geführten Laufbildfilm lagegenau zu fixieren, und
wobei die Filmhaltevorrichtung (113) insbesondere nach einem der vorhergehenden Ansprüche ausgebildet ist,
**dadurch gekennzeichnet,**
**dass** für das Eingreifen der Sperrgreifereinrichtung (61, 61') in die Filmtransportebene alternativ zu einer Referenzposition wenigstens eine Alternativposition auswählbar ist.

15. Filmabtastvorrichtung nach Anspruch 14,
**dadurch gekennzeichnet,**
**dass** die Filmabtastvorrichtung eine Steuer- und Auswerteschaltung (121) aufweist, durch die die Position des Eingreifens der Sperrgreifereinrichtung (61, 61') in die Filmtransportebene automatisch auswählbar ist.

16. Filmabtastvorrichtung nach Anspruch 15,
**dadurch gekennzeichnet,**
**dass** die Steuer- und Auswerteschaltung (121) eine Bilderkennungsschaltung aufweist, durch die ein Änderungsgrad ermittelbar ist, der dem Ausmaß einer Änderung der Bildinformation von zwei aufeinander folgend abgetasteten Filmbildern (73) entspricht, und
**dass** die Steuer- und Auswerteschaltung ein doppeltes Abtasten eines Filmbilds mit der Sperrgreifereinrichtung (61, 61') in der Referenzposition und in der Alternativposition veranlasst, wenn der zu diesem Filmbild ermittelte Änderungsgrad einen vorbestimmten Änderungsschwellwert überschreitet.
